# FASCICULE DE BREVET EUROPEEN

(11) **EP 3 430 777 B1**
(45) Date de publication et mention de la délivrance du brevet: **25.05.2022**
(21) Numéro de dépôt: 17715225.3
(22) Date de dépôt: 13.03.2017
(51) Int. Cl.: H04L 12/725, H04L 12/707

(54) **PROCÉDÉ ET SYSTÈME DE GESTION DYNAMIQUE DE CHEMINS DE COMMUNICATION ENTRE ROUTEURS EN FONCTION DE BESOINS APPLICATIFS**
VERFAHREN UND VERFUGUNG ZUR DYNAMISCHEN VERWALTUNG VON KOMMUNIKATIONSPFADEN ZWISCHEN ROUTERN JE NACH ANWENDUNGSANFORDERUNG
METHOD AND SYSTEM FOR DYNAMICALLY MANAGING COMMUNICATION PATHWAYS BETWEEN ROUTERS DEPENDING ON APPLICATION REQUIREMENT

(30) Priorité: 15.03.2016 FR 1652145
(43) Date de publication de la demande: 23.01.2019
(73) Titulaire: ORANGE, 92130 Issy-les-Moulineaux (FR)
(72) Inventeur: FIEAU, Frédéric, 75013 Paris (FR); FROMENTOUX, Gaël, 22560 Pleumeur Bodou (FR); BRAUD, Arnaud, 22300 Lannion (FR)
(86) Numéro de dépôt international: PCT/FR2017/050565
(87) Numéro de publication internationale: WO 2017/158272

(56) Documents cités:
- WO-A1-2007/047936
- US-A1- 2009 310 614
- US-A1- 2015 016 249
- US-A1- 2015 092 551
- US-A1- 2015 113 164

## Description

### 1. Domaine de l'invention

L'invention se situe dans le domaine des réseaux de transmission de données par paquets, et concerne plus particulièrement la sélection et l'adaptation des chemins de communication en fonction des besoins des applications générant les données.

### 2. Etat de la technique antérieure

Les opérateurs de réseaux et les fournisseurs de contenus cherchent de plus en plus à collaborer de façon à mieux faire corréler les besoins des applications et les capacités des réseaux. Les opérateurs y voient un moyen de monétiser le transport et d'optimiser la livraison des contenus au travers de leurs réseaux, et les fournisseurs d'applications un moyen d'adapter les sessions de données à leurs besoins. Ces interactions ont également pour objectif pour les opérateurs de mieux gérer leurs réseaux par rapport aux fluctuations de trafic et notamment la croissance de celui-ci. A partir des informations collectées sur le réseau et des solutions d'optimisations mettant en adéquation les exigences des applications et les capacités des réseaux, les fournisseurs de services de contenus souhaitent améliorer la qualité de service perçue par les clients de leurs services.

Les opérateurs cherchent de plus en plus à collaborer et à tisser des partenariats avec des fournisseurs de services de contenus. Ainsi, de nouveaux mécanismes ou protocoles permettant de mettre en relation les opérateurs de réseaux et les fournisseurs de services de contenus sont en cours de spécification.

Les solutions techniques basées sur MTG (en anglais Mobile Throughput Guidance), Webpush ou SPUD (en anglais Session Protocol Underneath Datagrams) sont autant de solutions permettant de mettre en œuvre une collaboration entre les acteurs de l'Internet, parmi lesquels les opérateurs et les fournisseurs de contenus.

A titre d'exemple, le protocole SPUD est en cours de spécification à l'IETF. L'expression de besoins liée à ce protocole est décrite dans le document https://tools.ietf.org/html/draft-trammell-spud-req-01 (19 octobre 2015). Ce protocole a pour objet de diffuser des messages, aussi appelés « advices », transportant des recommandations liées aussi bien au « services » qu'au « réseau ». Ces messages seront par exemple utilisés pour activer certaines fonctions dans les équipements du réseau. Il s'agit d'un protocole dit de collaboration permettant à des équipements d'extrémité de types client ou serveur d'échanger des « advices » avec des équipements du réseau pour adapter le comportement de ces équipements aux contraintes des applications activées sur les équipements d'extrémité.

D'autre part, les opérateurs déploient des architectures à base de tunnels, par exemple de type MPLS LSP (en anglais MultiProtocol Label Switch - Label Switch Path), pour écouler leur trafic au sein de réseaux mutualisés, garantissant ainsi une certaine étanchéité des flux ainsi que des politiques de qualité de service différentes selon les tunnels considérés. Des mécanismes d'ingénierie de trafic peuvent être ainsi utilisés par les opérateurs pour adapter le routage des flux aux contraintes de bande passante ou de disponibilité de ressources. Ces mécanismes sont activés à l'initialisation de la session établie entre le terminal et le serveur ou l'équipement distant s'il s'agit par exemple de réseaux Machine-to-machine. Par exemple, une manière d'adapter l'établissement de tunnels pour router un flux de données est d'utiliser le protocole DiffServ indiquant une classe de service caractérisant le flux. Ce champ Diffserv du paquet IP ou EXP du label MPLS est alors utilisé pour router le trafic au sein du réseau mutualisé.

Il est à noter que les caractéristiques d'un flux peuvent évoluer en cours de session applicative, ayant pour conséquence que le tunnel établit initialement n'est plus optimal.

Les techniques de collaboration en cours d'étude ou de spécification, parmi lesquels ceux cités précédemment (SPUD, Webpush, MTG) sont des solutions permettant aux applications d'exprimer des besoins en termes de traitement de trafic. Les équipements intermédiaires, en interprétant les besoins formulés par les applications, appliquent des traitements adéquats par exemple en ajoutant ou en modifiant des champs des datagrammes. Toutefois, ces solutions ne permettent pas de modifier des architectures de réseau ou des options de routage des flux en fonction de variation de paramètres exprimés par un fournisseur de contenus, par exemple de paramètres de qualité de service évoluant en cours de session.

Un des buts de l'invention est de remédier à ces inconvénients de l'état de la technique.

### 3. Exposé de l'invention

L'invention vient améliorer la situation avec un procédé de gestion d'au moins un chemin de communication pour l'acheminement des données d'une session établie entre un terminal (10) connecté a un premier routeur (30) et un équipement distant (70) connecté a un deuxième routeur (130), le procédé comprend les étapes suivantes mises en œuvre par un dispositif de gestion de chemin de communication, déployé entre le terminal et l'équipement distant:
- une analyse d'au moins un paramètre de la session (40) établie pour déterminer si la dite session (40) est collaborative, c'est-a-dire qu'elle peut bénéficier de la gestion de l'au moins un chemin, et si c'est le cas :
- un envoi de messages d'initialisation de session collaborative vers le terminal (10) et l'équipement distant (70) si la session est collaborative
- une réception en provenance du terminal ou de l'équipement distant d'au moins un message de signalisation comprenant au moins une information relative a une caractéristique de ladite session (40),
- une détermination de paramètres de connexion entre lesdits routeurs (30,130) en fonction de l'au moins une information obtenue,
- une émission des paramètres de connexion a destination du premier ou du deuxième routeur pour la mise a jour de l'au moins un chemin de communication (80) entre lesdits routeurs (30,130), ledit chemin mis a jour étant utilisé pour la transmission des données de ladite session.

L'établissement d'un chemin de communications entre deux routeurs, chacun des routeurs étant connecté respectivement au terminal initiant la session et à l'équipement d'extrémité de la session, est aujourd'hui réalisé à partir de techniques de routage ou de tunnels mis en œuvre en fonction de critères tels que les ressources disponibles dans le réseau, de bande passante ou de contraintes applicatives jusqu'à maintenant exprimées dans des champs du protocole IP tel que le champ Diffserv. Avec les techniques actuelles, il n'est pas possible de mettre à jour de façon dynamique, c'est-à-dire pour des sessions déjà établies entre un terminal et l'équipement distant, ces chemins de communications pour prendre en compte par exemple des variations de besoins applicatifs en cours de session, par exemple si une variation d'encodage impacte les capacités de mise en mémoire tampon et nécessite une mise à jour du routage ou du tunnel, selon la technique employée par l'opérateur, pour l'acheminement des flux. Selon les technologies actuelles, les chemins de communication qui peuvent être établis par la mise en œuvre de tunnels de types divers, par exemple sur la base de technologies MPLS ou par des encapsulations IP dans IP ou de type GRE voire par des technologies de routage de type « routage à la source » sont établis à l'initialisation de la session et ne sont pas modifiés en cours de session y compris si les caractéristiques de la session applicative varient dans le temps.

L'invention propose un procédé pour qu'un terminal ayant établi une session de type applicatif avec un équipement distant, par exemple un serveur ou un autre terminal, informe un routeur d'extrémité de chemin de communication des nouvelles caractéristiques de la session afin que ce routeur maintienne ou mette à jour le chemin de communication en place, donc le tunnel ou les informations de routage, de façon à ce que le chemin de communication soit toujours adapté aux besoins des applications. Il pourra s'agir par exemple de véhiculer les flux de la session sur un autre tunnel plus adapté aux nouvelles caractéristiques de la session, le nouveau tunnel ayant des caractéristiques de qualité de service permettant un acheminement des données conforme aux besoins de la dite session exprimés dans le message de signalisation transmis par le terminal au dispositif de gestion de chemin de communication. L'équipement distant peut également faire part de besoins applicatifs à travers au moins un message de signalisation émis vers un dispositif de gestion de chemin de communication de façon à mettre à jour le chemin de communication établi entre le routeur auquel l'équipement distant est connecté et le routeur auquel est connecté le terminal.

Dans un premier temps la session établie entre le terminal et l'équipement distant est analysée pour déterminer si la session en cours peut bénéficier du procédé de gestion dynamique du chemin de communication. Cette détermination est liée à une politique de l'opérateur et peut être effectuée à partir de l'analyse de certains champs ou caractéristiques de la session parmi lesquels le fournisseur de services, l'identité du client, le type de navigateur, le type de terminal utilisé par le client. Les exemples de champs cités ci-avant ne sont pas exhaustifs et il est possible de considérer n'importe quel champ caractérisant une session entre un terminal et un équipement distant.

Des messages de signalisation incluant des informations décrivant les besoins du terminal ou de l'équipement d'extrémité pour une session en cours sont envoyés respectivement par le terminal et l'équipement distant. Ces messages de signalisation sont reçus par le dispositif de gestion de chemin de communication pour que ce dernier les analyse. Ces messages de signalisation peuvent notamment contenir des informations décrivant le type d'application supporté par la session, le type de protocole, la localisation du terminal et de l'équipement distant, le type d'encodage, le taux de mise en mémoire tampon. Cette liste d'informations n'est pas exhaustive et peut être enrichie d'autres paramètres susceptibles d'être analysés par le dispositif de gestion de chemin de communication.

Ce message de signalisation transmis par le terminal ou l'équipement distant permet de qualifier les caractéristiques de la session applicative et de déterminer à partir de ces caractéristiques les paramètres de connexion du chemin de communication adaptés aux besoins applicatifs. Par exemple, l'analyse pourra porter sur le type d'application et le taux d'encodage et en fonction des informations reçues par rapport à ce type d'information, le dispositif de gestion de chemin de communication détermine quels paramètres de connexion doivent être transmis au routeur d'extrémité de chemin de communication de façon à ce qu'il sélectionne le chemin de communication adapté à ces paramètres de connexion.

On comprend que l'invention permet la mise en place et la mise à jour dynamique du chemin de communication entre deux routeurs en fonction de l'évolution de paramètres de sessions établies entre un terminal et un serveur.

Par mise à jour du chemin de communication il faut comprendre qu'un nouveau chemin de communication, par exemple un nouveau tunnel, peut être sélectionné ou bien qu'un nouveau chemin de communication peut être créé, voire qu'un chemin de communication existant soit mis à jour par exemple en modifiant les paramètres de ce chemin.

Selon une caractéristique particulière, l'étape d'établissement de la session du procédé de gestion comprend une étape d'analyse de la dite session pour la sélection dudit premier routeur auquel le terminal se connecte.

Les paramètres de la session initiée par le terminal au démarrage du service sont analysés de façon à router les sessions vers le routeur adéquat. Les paramètres de session tels que l'identifiant de session, l'adresse source du terminal, l'adresse destination de l'équipement distant de la session peuvent individuellement ou en combinaison par exemple être pris en considération pour le choix du routeur. Selon une caractéristique particulière, la sélection d'un nouveau routeur d'extrémité en cours de session peut intervenir en fonction de paramètres de la session établie entre le terminal et l'équipement distant. A titre d'exemple, une modification de la localisation du terminal et donc de l'information de localisation présente dans le flux de la session pourra nécessiter de sélectionner un routeur d'extrémité différent de celui sélectionné initialement en fonction des paramètres de la session.

Selon une autre caractéristique particulière, le procédé de gestion comprend en outre une étape d'envoi de messages d'initialisation de session collaborative vers le terminal et l'équipement distant si la session est collaborative.

Dans le cas où la session est définie comme éligible au service d'adaptation du chemin de communication entre le premier et le deuxième routeur, suite à l'analyse des caractéristiques de la session, un message d'initialisation est transmis au terminal ayant démarré la session ainsi qu'au serveur distant de la session. Ce message a pour objet de solliciter de la part du terminal et de l'équipement distant l'envoi d'au moins un message de signalisation comprenant les besoins de la session. Ce message permet de démarrer le processus d'adaptation du chemin de communication entre les deux routeurs en fonction de l'au moins une information véhiculée dans les messages de signalisation. Ainsi le chemin de communication sélectionné est adapté et mis à jour régulièrement en fonction des évolutions des paramètres de la session transmis dans les messages de signalisation.

A la réception du message d'initialisation, au moins un message d'initialisation est transmis par le terminal. Le serveur peut également transmettre au moins un message de signalisation à la réception de ce message d'initialisation.

Selon une autre caractéristique particulière, le procédé de gestion comprend en outre une étape de sélection de chemin de communication parmi des chemins préalablement établis dont les caractéristiques correspondent aux paramètres de connexion, en fonction desdits paramètres de connexion.

Lorsqu'un chemin de communication ou tunnel existant répond aux paramètres de connexion déterminés à partir de l'au moins une information transmise dans le message de signalisation émis par le terminal ou l'équipement distant, celui-ci est sélectionné pour l'acheminement des flux de la session pour laquelle au moins un message de signalisation a été transmis. La politique de sélection du chemin de communication en fonction des paramètres de flux de session est propre à l'opérateur. L'opérateur a la possibilité de considérer un ou plusieurs paramètres de connexion pour la sélection du chemin de communication et il pourra par exemple utiliser une table de correspondance permettant d'associer des paramètres de de connexion tels que déterminés par le dispositif de gestion de chemin de communication avec des caractéristiques de chemin de communication. A titre d'exemple, plusieurs tunnels de type IP/MPLS peuvent être instanciés par le routeur d'extrémité avec un autre routeur d'extrémité, chacun ayant des caractéristiques de qualité de service différents et le tunnel dont la caractéristique la plus proche des paramètres de connexion en terme de qualité de service sera sélectionné pour l'acheminement des données de la session considérée.

Selon une autre caractéristique particulière, le procédé de gestion comprend une étape d'établissement de chemin de communication aux caractéristiques correspondant aux paramètres de connexion, dans le cas où aucun chemin préalablement établi ne correspond auxdits paramètres de connexion.

Dans le cas où aucun chemin de communication existant ne présente des caractéristiques suffisamment proches des paramètres de connexion déterminés à partir de l'au moins une information transmise dans au moins un message de signalisation émis par le terminal, un nouveau chemin de communication ayant les caractéristiques requises est créé par le routeur d'extrémité. Ce nouveau chemin de communication présentera les caractéristiques répondant aux paramètres de la session et sera intégré à la base des chemins de communications établis de façon à pouvoir être utilisé pour d'autres sessions dont les paramètres de connexion se rapprocheraient des caractéristiques de ce chemin de communication nouvellement créé. Il pourra s'agir par exemple de créer un nouveau tunnel IP/MPLS ayant des caractéristiques adaptées aux paramètres de connexion entre les routeurs de rattachement du terminal et de l'équipement d'extrémité de la session.

Selon une autre caractéristique particulière, le procédé de gestion comprend en outre une étape de multiplexage des données de ladite session avec des données d'au moins une autre session dans un chemin de communication.

Un chemin de communication établi entre le premier routeur d'extrémité et le deuxième routeur d'extrémité est utilisé pour véhiculer plusieurs sessions initiées par un ou plusieurs terminaux à destination d'un ou plusieurs équipements d'extrémité différents. Le choix du chemin de communication est réalisé à partir de paramètres de connexion déterminés à partir de l'au moins une information d'un message de signalisation. Dans le cas où les paramètres de connexion déterminés sont suffisamment proches pour que des données de plusieurs sessions soient transmises sur un même chemin de communication, selon une caractéristique particulière les données de sessions sont alors multiplexées sur ce chemin de communication permettant ainsi de réduire le nombre de chemins de communication entre les routeurs d'extrémité. Le nombre maximal de sessions à multiplexer et la nécessité de créer un nouveau chemin de communication le cas échéant est une décision relevant de l'ingénierie de réseau propre à l'opérateur.

Selon une autre caractéristique particulière, le procédé de gestion comprend en outre une étape de transmission des données de ladite session sur au moins deux chemins de communication.

Si une session donnée ne peut être transmise sur un seul chemin de communication en raison de problèmes de bande passante ou pour optimiser la transmission des données de la session, la transmission des données d'une même session sur plusieurs chemins de communication en parallèle peut être envisagée. Lors de la réception des paramètres de connexion, le routeur d'extrémité détermine s'il est nécessaire de transmettre les données de la session correspondant aux paramètres de connexion reçus sur un seul ou plusieurs chemins de communication.

Les différents aspects du procédé de gestion qui viennent d'être décrits peuvent être mis en œuvre indépendamment les uns des autres ou en combinaison les uns avec les autres.

Selon un deuxième aspect, l'invention concerne un dispositif de gestion de chemin de communication (20,120), déployé entre le terminal (10) et le premier routeur d'extrémité (30) ou entre l'équipement distant (70) et le deuxième routeur d'extrémité (130), ledit dispositif comprenant:
- un analyseur (204) d'au moins un paramètre de session (40) établie entre le terminal(10) et l'équipement distant (70) afin de déterminer si ladite session est collaborative, c'est-a-dire qu'elle peut bénéficier de la gestion de l'au moins un chemin,
- un générateur de messages d'initialisation de session collaborative (203) vers le terminal (10) et l'équipement distant (70) si ladite session (40) est collaborative
- un récepteur (201) en provenance du terminal ou de l'équipement distant d'au moins un message de signalisation comprenant au moins une information relative a une caractéristique de ladite session (40),
- un module de détermination (205) des paramètres de connexion entre lesdits routeurs en fonction d'au moins une information obtenue dans au moins un message de signalisation,
- un émetteur (202) des paramètres de connexion vers le routeur d'extrémité (30) pour la mise a jour de l'au moins un chemin de communication (80) entre lesdits routeurs (30,130), ledit chemin mis a jour étant utilisé pour la transmission des données de ladite session.

Le dispositif de gestion de chemin de communication est déployé en coupure de session, par exemple dans un équipement intermédiaire de type routeur ou « middlebox » (équipement pare-feu, équipement DPI (en anglais DeeP Packet Inspection...), connecté au réseau connectant le terminal et le routeur d'extrémité de chemin de communication ou au réseau connectant l'équipement distant et le deuxième routeur d'extrémité. Il est à noter que le procédé de sélection de chemin de communication s'appuie sur au moins un dispositif de gestion de chemin de communication. Ce dispositif analyse les caractéristiques des sessions en cours et détermine à partir d'une ou plusieurs de ces caractéristiques si ces sessions sont de type collaboratif à partir d'au moins un paramètre de ladite session. Il reçoit en outre les messages de signalisation émis par le terminal ou l'équipement distant pour une session donnée et détermine à partir d'au moins une information des messages de signalisation les paramètres de connexion requis entre les routeurs d'extrémité du chemin de communication pour que la session soit acheminée sur le chemin de communication le plus adapté. Ces paramètres de connexion sont ensuite transmis au routeur d'extrémité de chemin de communication de façon à ce qu'il sélectionne un chemin de communication dont les caractéristiques sont adaptées aux paramètres de connexion.

Selon une caractéristique particulière, le dispositif de gestion comprend en outre un générateur de messages d'initialisation de session collaborative vers le terminal et l'équipement distant si ladite session est collaborative.

Le dispositif de gestion de chemin de communication selon une caractéristique particulière intègre un module d'émission de message d'initialisation de session collaborative à destination du terminal et de l'équipement distant de la session. Lorsque le dispositif de gestion de chemin de communication détecte qu'une session est collaborative à partir de l'analyse des caractéristiques de la dite session, il émet des messages d'initialisation vers le terminal et le dispositif d'extrémité leur indiquant ainsi que la session est considérée comme collaborative et ils peuvent émettre des messages de signalisation utilisés pour déterminer les paramètres de connexion et donc le chemin de communication.

Selon une autre caractéristique particulière, le dispositif de gestion est caractérisé en ce qu'il est embarqué dans un routeur d'extrémité de chemin de communication.

Le dispositif de gestion de chemin de communication peut être intégré à un routeur d'extrémité du chemin de communication. Le dispositif de gestion de chemin de communication étant déployé entre le terminal et le routeur d'extrémité de chemin de communication, il peut selon une caractéristique particulière être avantageusement intégré à un routeur d'extrémité de chemin de communication. Dans le cas où le routeur d'extrémité de chemin de communication est sélectionné en fonction d'au moins un paramètre de session, le dispositif peut être intégré à chacun des routeurs susceptibles d'être sélectionné. Une seconde option consiste à intégrer le dispositif de gestion de chemin de communication dans un des routeurs d'extrémité de chemin auquel le terminal se connectera par défaut, ce dernier ayant le rôle de sélectionner le chemin de communication pouvant impliquer en outre la sélection d'un autre routeur d'extrémité. A titre d'exemple, le routeur d'extrémité pourra intégrer un composant matériel ou logiciel spécifique d'analyse intégrant les différents modules propres au dispositif de gestion de chemin de communication tel que décrit précédemment. L'émission des paramètres de connexion vers le routeur d'extrémité consiste dans ce cas à transférer les informations concernant les paramètres de connexion depuis le composant d'analyse vers la fonction de sélection du chemin de communication du routeur d'extrémité.

L'invention concerne aussi un **système de** gestion de chemin de communication comprenant :
- au moins un dispositif de gestion tel que celui qui vient d'être décrit
- au moins deux routeurs d'extrémité de chemin de communication comprenant :
   - une base de données décrivant les chemins de communication établis avec d'autres routeurs d'extrémité et des caractéristiques desdits chemins de communication
   - un récepteur des paramètres de connexion d'une session entre un terminal et un équipement distant émis par le dispositif de gestion de chemin de communication
   - un module de sélection du chemin de communication en fonction desdits paramètres de connexion

L'invention concerne aussi un programme d'ordinateur comprenant des instructions pour la mise en œuvre des étapes du procédé de gestion de chemin de communication qui vient d'être décrit, lorsque ce programme est exécuté par un processeur.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution des procédés en question.

L'invention est définie par les revendications indépendantes.

### 4. Présentation des figures

D'autres avantages et caractéristiques de l'invention apparaitront plus clairement à la lecture de la description suivante d'un mode de réalisation particulier de l'invention, donné à titre de simple exemple illustratif et non limitatif, et des dessins annexés, parmi lesquels :
- La figure 1 présente de façon schématique un système de sélection dynamique de chemin de communication faisant intervenir un terminal et un équipement distant, deux dispositifs de gestion de chemin, deux routeurs d'extrémité de chemin de communication, un réseau d'interconnexion composés de plusieurs chemins de communication selon l'invention,
- la figure 2 décrit les différentes étapes du procédé de gestion selon un aspect de l'invention,
- la figure 3 représente les différents messages échangés entre les différentes entités dans un mode particulier de réalisation du procédé de gestion selon l'invention,
- la figure 4 représente une structure d'un dispositif de gestion de chemin de communication, selon un mode particulier de réalisation de l'invention.

### 5. Description détaillée d'au moins un mode de réalisation de l'invention

Dans la suite de la description, va être décrite un mode de réalisation du procédé de gestion de chemins de communication selon l'invention. A titre d'exemple on considèrera que la fonction d'analyse n'est pas co-localisée avec le routeur d'extrémité de chemin de communication.

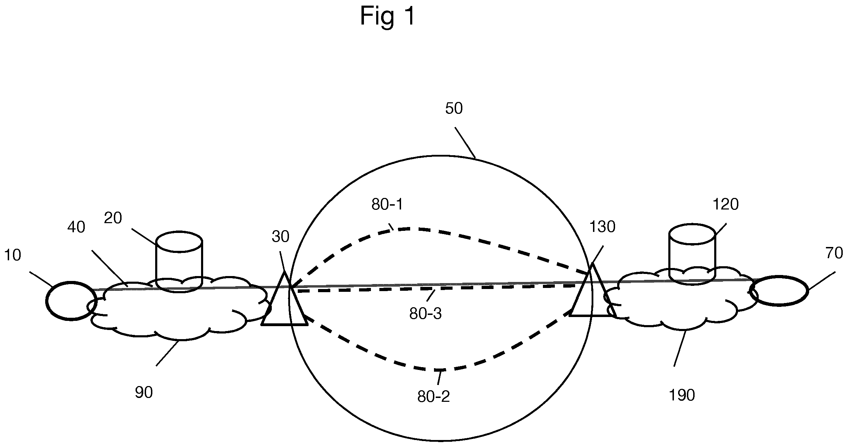

La figure 1 présente un système de sélection de chemin de communication. L'opérateur déploie un réseau d'interconnexion 50 auquel sont connectés au moins deux routeurs d'extrémité de chemin de communication 30, 130. Le terminal 10 se connecte à travers un réseau d'accès 90 à un routeur d'extrémité de chemin de communication 30. L'équipement distant 70, avec lequel le terminal 10 établit une session 40, est lui-même connecté à un routeur d'extrémité de chemin de communication 130 à travers un réseau d'accès 190 qui peut soit être le même que le réseau d'accès auquel est attaché le terminal, ou un réseau d'accès différent, de même technologie ou de technologie différente du réseau d'accès du terminal. A titre d'exemple, le réseau d'accès 90 auquel se connecte un terminal peut être un réseau ADSL tandis que le réseau d'accès 190 de l'équipement distant est un réseau GPRS. Le réseau d'interconnexion 50 des routeurs d'extrémité 30 peut par exemple être une infrastructure IP/MPLS permettant de véhiculer les différents flux des clients, connectés à des réseaux d'accès 90 ou 190 de type mobile ou de type fixe.

Entre le terminal 10 et l'équipement distant 70, se trouve au moins un dispositif de gestion de chemin de communication 20, 120 qui va intervenir pour le choix du chemin de communication 80. Il faut au moins un dispositif de gestion de chemin doit se trouver entre le terminal 10 et l'équipement distant 70, pour que le procédé de gestion puisse être mis en œuvre.

Les chemins de communication 80-1 80-2 80-3 établis entre deux routeurs d'extrémité (30,130) au sein du réseau d'interconnexion 50 pourront par exemple être des tunnels IP-in-IP, des tunnels GRE, des tunnels IPSEC ou des tunnels de type LSP s'il s'agit d'un réseau d'interconnexion de type IP/MPLS. Sachant que le chemin de communication doit prendre en compte des caractéristiques émises par le terminal 10 et l'équipement distant 70, les chemins de communication pourront être par exemple des TE-LSP, c'est-à-dire des tunnels routés en fonction de contraintes, dans cette invention, transmises via les messages de signalisation émis par les équipements en charge d'envoyer ces messages.

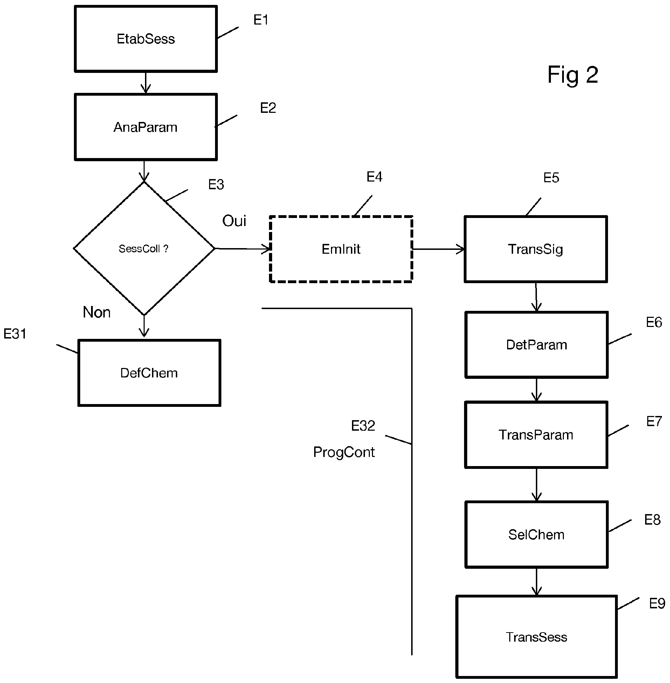

La **figure** 2 décrit les différentes étapes du procédé de gestion selon un aspect de l'invention.

Au démarrage du service, c'est-à-dire lorsque le client se connecte par exemple à un service web pour visionner une vidéo, écouter un service audio ou accéder à un service de données de type texte, son terminal lors d'une étape E1 initie une session 40 avec un équipement distant 70.

Le choix du routeur d'extrémité 30 auquel se connecte le terminal 10 pour établir la session pourra dépendre des caractéristiques de la dite session 40. Par exemple il est envisagé que pour certaines destinations (selon le fournisseur de services ou le domaine de destination...), un routeur d'extrémité spécifique 30 soit sélectionné.

Le dispositif de gestion de chemin de communication 20 situé sur le chemin de données de la session examine les paramètres de la session de façon à qualifier ladite session lors d'une étape E2. La fonction d'analyse est soit localisée dans un équipement spécifique hébergeant alors principalement cette fonction, soit localisée dans un équipement intermédiaire tel qu'un pare-feu, équipement DPI (en anglais Deep Packet Inspection), un équipement d'optimisation des flux, voire dans un routeur d'extrémité 30. Il est également possible que plusieurs dispositifs de gestion de chemin de communication 20 soient présents sur le chemin de données, auquel cas chacun des dispositifs effectuera les fonctions telles que présentées ci-après. Pour que la sélection du chemin de communication 80 puisse être activée il faut au moins un dispositif de gestion de chemin de communication sur le chemin de données entre le terminal 10 et l'équipement distant 70.

Ce dispositif de gestion de chemin de communication 20, à partir des paramètres de session 40, détermine lors d'une étape E3 si ladite session 40 est de type collaboratif, c'est-à-dire si elle pourra bénéficier de la fonction de routage dynamique décrite dans cette invention. Les paramètres pris en compte pour qualifier l'éligibilité de la session 40 au routage dynamique sont propres aux architectures mises en œuvre par les opérateurs. A titre d'exemple, le type de terminal 10, le domaine du serveur destinataire de la session, l'adresse IP de l'équipement distant 70 pourront être analysés et pris en compte pour déterminer que la session 40 est collaborative.

Ainsi, dans le cas où la session 40 n'est pas considérée comme collaborative, aucune action spécifique n'est mise en œuvre et les flux sont routés sur le réseau d'interconnexion de l'opérateur conformément aux règles d'acheminement dites classiques lors d'une étape E31 en se basant sur les informations de la couche IP et l'analyse des informations de qualité de service du datagramme et notamment des informations Diffserv si ceux-ci sont pris en compte dans l'architecture de l'opérateur, conformément à ce qui est utilisé dans la technique antérieure.

Si la session 40 est identifiée comme collaborative par le dispositif de gestion de chemin de communication 20 lors de l'étape E3 parce que l'un des paramètres ou plusieurs paramètres analysés par le dispositif de gestion de chemin de communication 20 correspondent à une telle session 40, alors le dispositif de gestion de chemin de communication 20 pourra émettre un message d'initialisation de session collaborative lors d'une étape E4 vers le terminal 10 et l'équipement distant 70. L'étape E32 comprend les différentes étapes intervenant dans le procédé lorsque la session est identifiée comme collaborative, à savoir les étapes E4 jusqu'à E9.

A la réception du message d'initialisation envoyé par le dispositif de gestion de chemin de communication 20, le terminal 10 ainsi que l'équipement distant 70 sont informés que la session initiée est de type collaboratif.

Ces messages d'initialisation sont considérés comme optionnels. En effet, un autre mode de mise en œuvre du procédé peut consister à ce que les équipements d'extrémité de session et intermédiaires sur le chemin de données émettent des messages de signalisation en l'absence de messages d'initialisation, sachant que ces messages seront ou non pris en compte selon que la session bénéficie du procédé ou non. On peut en effet envisager que tous les terminaux se connectant sur un réseau mobile bénéficient du procédé, auquel cas il serait inutile de leur indiquer systématiquement que les sessions qu'ils établissent sont bénéficiaires du procédé.

Chaque dispositif de gestion de chemin de communication 20 présent sur le chemin de données agit de la sorte et transmet un message d'initialisation, ces messages transmettant la même information vers le terminal et l'équipement distant puisque les différents dispositifs de gestion de chemin de communication 20 sont configurés suivant une politique de gestion cohérente par l'opérateur. Les équipements d'extrémité de la session, le terminal 10 et l'équipement distant 70 de même que les routeurs d'extrémité de chemin de communication 30 ayant intercepté les messages d'initialisation envoient un message de signalisation lors d'une étape E5 dont l'objet est de sélectionner le chemin de communication le plus adapté aux paramètres de la session initialisée.

L'envoi des messages de signalisation est effectué sur réception du message d'initialisation reçu depuis l'équipement supportant la fonction d'analyse, ou bien par défaut si les messages d'initialisation ne sont pas utilisés dans le procédé. Lorsqu'une session a été identifiée comme de type collaboratif selon l'étape E3 du procédé, le terminal 10 et l'équipement distant 70 de même que les routeurs d'extrémité 30 de chemin de communication 80 pourront envoyer des messages de signalisation à intervalle réguliers, y compris si les caractéristiques de session ne sont pas modifiées et ne requièrent pas à priori de mise à jour du chemin de communication 80. Dans un souci d'optimisation, il est également envisageable que ces équipements ne transmettent de nouveaux messages de signalisation que lorsque des caractéristiques de session évoluent et sont donc susceptibles d'entrainer un changement de chemin de communication 80, pour assurer un transfert de données répondant aux critères de qualité de service correspondant aux nouvelles caractéristiques de session. Dans ce cas les données de session pour lesquelles un nouveau message de signalisation a été émis par un équipement seront routées dans un chemin de communication existant 80 ou un chemin à créer si aucun des chemins existants 80 ne propose une qualité de service adapté aux caractéristiques de la session. Une autre option, si par exemple il n'est pas possible de créer un nouveau chemin de communication, est de modifier le chemin existant 80 pour que ses caractéristiques soient adaptées aux paramètres de la dite session.

A partir d'au moins un message de signalisation reçu, le dispositif de gestion de chemin de communication 20 détermine des paramètres de connexion lors d'une étape E6 permettant de sélectionner le chemin de communication 80 adapté aux caractéristiques de la session 40. Le dispositif de gestion de chemin de communication 20, pour déterminer les paramètres de connexion, utilise par exemple une base de données à partir de laquelle il peut associer des caractéristiques de session 40 avec des paramètres de connexion.

Dans une étape E7, le dispositif de gestion de chemin de communication 20 transmet les paramètres de connexion au routeur d'extrémité 30 en charge de l'acheminement des données de la session dans le réseau d'interconnexion 50. Afin de transmettre les paramètres de connexion au routeur d'extrémité 30, le dispositif de gestion de chemin de communication 20 peut utiliser un protocole spécifique, par exemple Netconf (Network Configuration Manager) ou SNMP (Simple Network Management Protocol). Il peut aussi transmettre les informations de paramètres de connexion via un protocole utilisé à d'autres fins, par exemple un protocole de routage, tel que OSPF (en anglais Open Short Path First) ou BGP (en anglais Border Gateway Protocol). Dans un environnement où les technologies de SDN (en anglais Software Defined Networks) sont utilisées, la transmission des paramètres de connexion vers les routeurs d'extrémité 30 peut s'opérer à partir d'un Contrôleur de Réseau voire à partir d'un orchestrateur.

A partir des paramètres de connexion reçus du dispositif de gestion de chemin de communication 20, le routeur d'extrémité 30 sélectionne le chemin de communication 80. Le routeur d'extrémité 30 peut utiliser une base de données au sein de laquelle sont répertoriés les différents chemins de communication 80 établis dans le réseau d'interconnexion 50 ainsi que les caractéristiques de ces différents chemins. Ainsi, le dit routeur 30 est en mesure de sélectionner le chemin 80 dont les caractéristiques correspondent aux paramètres de connexion reçus. Dans le cas où aucun chemin 80 en place ne présente des caractéristiques correspondant aux paramètres de connexion reçus, le routeur d'extrémité 30 crée un nouveau chemin de communication 80 ayant des caractéristiques correspondant aux paramètres de connexion transmis par le dispositif de gestion de chemin de communication 20 et met à jour sa base de données avec le nouveau chemin 80 créé et les caractéristiques de ce nouveau dit chemin 80, ceci afin que le routeur d'extrémité 30 puisse utiliser ce tunnel pour d'autres sessions pour lesquelles des messages de signalisation auront conduit à déterminer des paramètres de connexion correspondant aux caractéristiques dudit nouveau chemin. Si pour quelque raison, le routeur d'extrémité ne peut créer de nouveau chemin, ou si l'option retenue par l'opérateur est de ne pas créer de nouveau chemin dans le cas où aucun ne convient, une modification de chemin existant 80 est également possible et nécessite en outre une mise à jour de la base de données avec ces nouvelles caractéristiques.

Une fois le chemin de communication 80 sélectionné, le routeur d'extrémité 30 transmet les données de la session sur le nouveau chemin sélectionné 80. Dans le cas où les données d'une seule session 40 ne sont transmises que sur un chemin de communication 80, le chemin de communication 80 est spécifique à une session donnée 40. Dans le cas où plusieurs sessions 40 utilisent un même chemin de communication 80, les données de ces sessions sont multiplexées par ledit routeur d'extrémité 30 sur le chemin de communication 80. Ce multiplexage intervient aussi bien à l'initialisation de la session que lorsque la session est établie si par exemple un nouveau chemin de communication 80 déjà utilisé pour d'autres sessions 40 doit être utilisé pour une session 40 en cours.

Une autre option de mise en œuvre consiste à ce que les flux d'une session 40 soient acheminés sur plusieurs chemins de communications 80. Dans ce cas, le routeur d'extrémité 30 route le flux de la session 40 sur plusieurs chemins 80, le choix des chemins 80 étant sous la responsabilité du routeur d'extrémité 30.

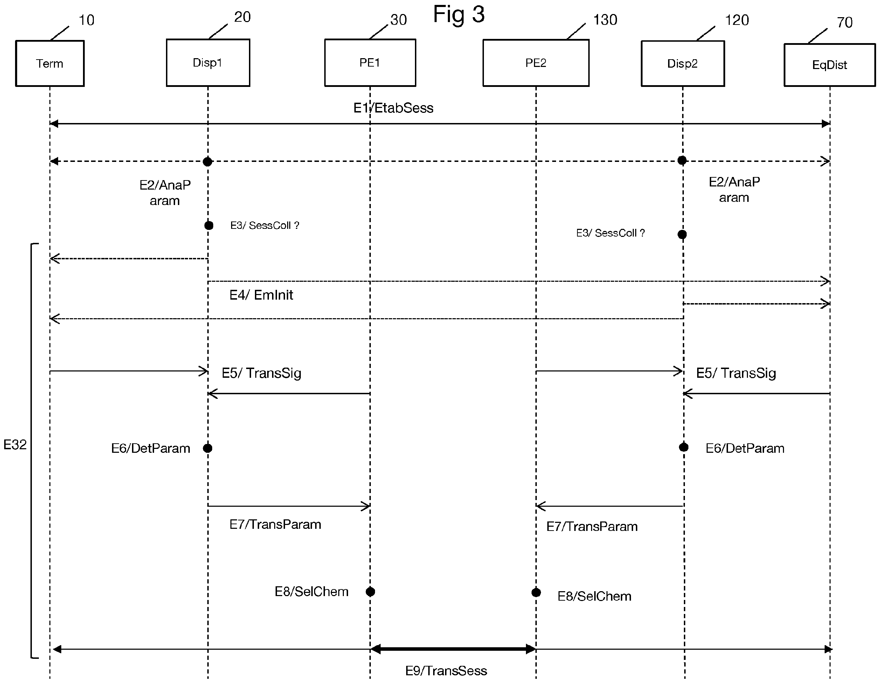

La **figure** 3 présente les différents échanges entre différentes entités du système permettant la mise en œuvre du procédé et correspondant aux étapes décrites dans la figure 2. Dans ce mode de réalisation, les chemins de communication sont mis en œuvre par l'opérateur entre des routeurs d'extrémité PE (en anglais Provider Edge) et sont des tunnels MPLS de type LSP (en anglais Label Switch Path). Les mises à jour de ces tunnels en fonction de critères de qualité de service sont réalisés à partir du protocole SPUD, protocole de session entre un terminal et un serveur (ou un autre terminal) au-dessus duquel les sessions applicatives sont établies.

Une session donnée est supportée par un tube SPUD, c'est-à-dire un chemin caractéristique d'une session SPUD, caractérisé par les paramètres suivants :
- Identifiant de session SPUD (SPUD-session-ID)
- Identifiant de navigateur (Browser-ID)
- Identifiant de logiciel (Payer-ID)
- Identifiant de terminal (Terminal-ID)
- Type de Terminal (Terminal-type)
- Adresse IP source du terminal (@IP terminal)
- Adresse IP destination du serveur (@IP serveur)
- Identifiant de serveur (Server-ID)

Le tableau 1 présente un exemple de caractéristiques de tubes SPUD, comprenant le type de terminal initiant la session, le service activé nécessitant la mise en œuvre d'une session, les contraintes du tube SPUD et plus précisément les adresses IP intermédiaires du tube ainsi que le fournisseur de services.

**Tableau 1: Caractéristiques de tube SPUD**

| | **Terminal** | **Service** | **Contraintes** | **Fournisseur de services destinataire** |
|---|---|---|---|---|
| SPUD 1 | Android | Video | none | @Youtube |
| SPUD 2 | PC | Video | @IP1, @IP2 | @Youtube |
| SPUD 3 | PC | Video | @IP3 | @Dailymotion |

En fonction des paramètres du tube SPUD, celui-ci est routé vers un routeur d'extrémité de tunnel aussi appelé PE. La sélection d'un PE parmi l'ensemble des PEs gérés par l'opérateur est réalisée en fonction des paramètres du tube SPUD et est propre à l'ingénierie de l'opérateur. Par exemple, l'opérateur peut prendre en compte l'adresse IP de destination de la session ou le type de service pour router le tube SPUD vers un routeur spécifique. Il peut également ne prendre en compte aucun paramètre et router le tube SPUD vers un routeur par défaut ou sélectionné en fonction du routage activé sur le réseau d'accès.

Une session http (en anglais hypertext transfert protocol) est établie lors d'une étape E1 entre un terminal 10 et un serveur 70, cette session s'appuyant sur une session SPUD.

Un dispositif de gestion de chemin de communication 20 situé sur le chemin de données de la session examine les paramètres de la session SPUD, support de la session http, de façon à qualifier ladite session lors d'une étape E2.

Au moins un dispositif de gestion de chemin de communication 20, à partir des paramètres de session SPUD, détermine si la session SPUD est de type collaboratif lors d'une étape E3, c'est-à-dire si elle pourra bénéficier de la gestion de chemin décrite dans cette invention.

En référence aux paramètres du tableau 1, il est considéré que l'opérateur souhaite que les flux Dailymotion bénéficient de la sélection dynamique de chemin, ce qui induit que le tube SPUD3 sera routé dans un tunnel correspondant aux caractéristiques de ce tube tandis que les autres tubes (SPUD 1 et SPUD 2) ne sont pas impactés par le procédé.

Un message d'initialisation de session collaborative (SPUD Hello) est envoyé lors d'une étape E4 vers le terminal 10 et l'équipement distant 70 si la session est identifiée comme collaborative. Le procédé ne requiert pas nécessairement l'envoi de messages de type SPUD Hello qui peuvent être optionnels.

Dans une approche plus complète, le message SPUD Hello pourra indiquer des besoins en terme de caractéristiques de message de signalisation SPUD à intégrer par le terminal 10, le serveur 70 et les équipements placés sur le chemin de données pouvant émettre des messages de signalisation SPUD à la réception du message d'initialisation.

Le dispositif de gestion de chemin de communication 20 s'appuie sur une base de données permettant d'apprécier le caractère collaboratif en comparant les paramètres de la session SPUD avec le contenu de la base de données.

A la réception du message SPUD Hello envoyé par le dispositif de gestion de chemin de communication 20, le terminal 10 ainsi que le serveur 70 sont informés que la session initiée est de type collaboratif.

Les équipements d'extrémité de la session, le terminal 10 et le serveur 70 de même que les routeurs d'extrémité de chemin de communication 30 et 130 ayant intercepté les messages SPUD Hello envoient un message de signalisation SPUD (en anglais SPUD advice) lors d'une étape E5 dont l'objet est de sélectionner le tunnel LSP le plus adapté aux paramètres de la session SPUD initialisée. Les caractéristiques des messages de signalisation SPUD sont décrites dans le tableau 2 à titre d'exemple:

**Tableau 2: Messages de signalisation SPUD**

| | **Mise en mémoire tampon** - **ratio** | **Taux encodage** | **Temps de démarrage** | **Type de protocole** | **Géo Localisation** | **Tube** |
|---|---|---|---|---|---|---|
| Advice 1 | <5% | 500 kbps | 1s | Vidéo | FR | SPUD 1 |
| Advice 2 | >5% | 1 Mo | 2s | Vidéo | FR | SPUD 2 |
| Advice 3 | >5% | 1Mo | 2s | Vidéo | FR | SPUD 3 |

Dans les messages de signalisation SPUD décrits dans le tableau 2, dans le cas où le ratio de mise en mémoire tampon côté lecteur augmente de plus de 5%, un nouveau message (Advice3) du tube SPUD1 doit être généré pouvant conduire à la mise à jour du chemin de communication, donc au recours à un autre tunnel LSP dans le cas présent, de façon à maintenir la qualité de service pour le client.

A titre d'exemple, le tableau 3 présente des paramètres de connexion définis par le dispositif de gestion de chemin de communication 20 à partir des caractéristiques de session émises dans les messages de signalisation SPUD et qui vont pouvoir être interprétés par les routeurs PE pour la sélection du tunnel LSP et la transmission des données de la session dans le tunnel LSP.

**Tableau 3: Paramètres de connexion**

| | **Bande passante requise** | **Qualité de Service** | **Délai** | **Version protocole IP** |
|---|---|---|---|---|
| SPUD 1 | 10M | AF | 100 ms | IPv4 |
| SPUD 2 | 3M | EF | 300 ms | IPv6 |

Le tableau 4 présente une liste de tunnels MPLS ainsi que leurs caractéristiques et leurs contraintes réseau, à titre d'exemple.

**Tableau 4: Caractéristiques des tunnels**

| | **Adresse destinât ion** | **Classe** | **Bande Passante totale** | **Délai** | **Bande Passante utile** | **Direction** | **Bande Passante restante** |
|---|---|---|---|---|---|---|---|
| Tunnel 1 | 1.1.1.1 | EF | 100M | 10 ms | 80M | uni | 20 M |
| Tunnel 2 | 2.2.2.2 | AF | 70M | 100 ms | 65M | blr | 5 M |
| Tunnel 3 | 3.3.3.3 | EF | 500M | 5 ms | 100M | blr | 400M |

La description des contraintes réseau est présentée dans le tableau 5, à titre d'exemple:

**Tableau 5: Routage des tubes SPUD dans les tunnels MPLS**

| | **Trafic** | **PE** | | | **Trafic** | **PE** |
|---|---|---|---|---|---|---|
| SPUD 1 | Tunnel 1 | Adresse PE1 | → | SPUD 2 | Tunnel 2 | Adresse PE2 |
| SPUD 2 | Tunnel 2 | Adresse PE2 | | SPUD 1 | Tunnel 3 | Adresse PE1 |

A partir d'au moins un message reçu, le dispositif de gestion de chemin de communication 20 détermine des paramètres de connexion lors d'une étape E6 permettant de sélectionner le tunnel IP/MPLS correspondant aux caractéristiques de la session.

Dans une étape E7, le dispositif de gestion de chemin de communication 20 transmet les paramètres de connexion au routeur PE 30 en charge de l'acheminement des données de la session dans le réseau IP/MPLS 50.

A partir des paramètres de connexion reçus du dispositif de gestion de chemin de communication 20, le PE 30 sélectionne au moins un tunnel IP/MPLS 80 lors d'une étape E8 grâce à une base de données au sein de laquelle sont répertoriés les différents tunnels IP/MPLS 80 ainsi que leurs caractéristiques.

Une fois le tunnel IP/MPLS 80 sélectionné, le PE 30 transmet les données de la session dans le au moins un tunnel sélectionné si besoin en utilisant les techniques de multiplexage, lors d'une étape E9.

La mise en œuvre du procédé tel que décrit à titre d'exemple pour le PE 30 et le dispositif de chemin de communication 20 s'applique également pour le PE 130 et le dispositif de gestion 120, le PE 130 et le dispositif 120 ayant les rôles respectifs du PE 30 et du dispositif 20 dans la mise en œuvre du procédé.

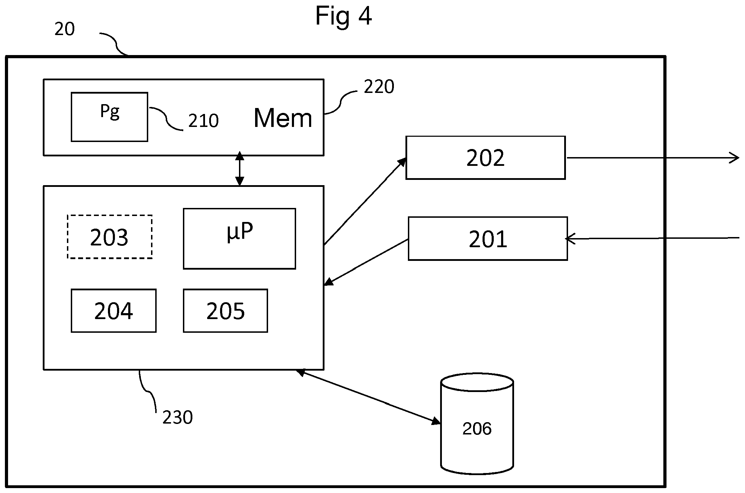

En relation avec la **figure 4****,** on présente maintenant un exemple de structure d'un dispositif de gestion de chemin de communication, selon un aspect de l'invention.

Le dispositif 20 de gestion de chemin de communication met en œuvre le procédé de gestion de chemin de communication, dont différents modes de réalisation viennent d'être décrits.

Un tel dispositif 20 peut être mis en œuvre dans routeur d'extrémité 30.

Le dispositif de gestion de chemin de communication 120 présente la même structure que le dispositif 20 et peut être mis en œuvre dans le routeur d'extrémité 130.

Par exemple, le dispositif 20 comprend une unité de traitement 230, équipée par exemple d'un microprocesseur µP, et pilotée par un programme d'ordinateur 210, stocké dans une mémoire 220 et mettant en œuvre le procédé d'autorisation selon l'invention. A l'initialisation, les instructions de code du programme d'ordinateur 210 sont par exemple chargées dans une mémoire RAM, avant d'être exécutées par le processeur de l'unité de traitement 230.

Un tel dispositif 20 comprend les modules suivants:
- Un module d'analyse 204 des sessions établies, agencé pour déterminer si une session est de type collaboratif et de déclencher, si c'est le cas, l'envoi de messages d'initialisation si l'option est effectivement retenue,
- Un module d'émission 202 agencé pour émettre les paramètres de connexion vers les routeurs d'extrémité de chemin de communication 30,
- Un module de réception 201, agencé pour recevoir des messages de signalisation à partir desquels le dispositif de gestion de chemin de communication 20 définit les paramètres de connexion,
- Un module de détermination 205 des paramètres de connexion agencé pour déterminer les paramètres de connexion à partir des messages de signalisation reçus d'équipements sur le chemin de communication, qui seront transmis vers le routeur d'extrémité 30,
- Une base de données 206 agencée pour associer des caractéristiques de session transmis dans les messages de signalisation avec des paramètres de connexion.

Optionnellement, dans un autre mode de réalisation, le dispositif de gestion de chemin de communication 20 comprend en outre un module d'initialisation 203 agencé pour définir les caractéristiques requises par les équipements en fonction des messages d'initialisation et agencé pour créer des messages d'initialisation. Dans cette option, le module d'émission 202 est en outre agencé pour émettre les messages d'initialisation à destination du terminal 10 et de l'équipement distant 70.

Le module décrit en relation avec la figure 4 peut être un module matériel ou logiciel.

Les exemples de réalisation de l'invention qui viennent d'être présentés ne sont que quelques-uns des modes de réalisation envisageables.

Il est rappelé que, selon la technique antérieure, les sessions applicatives sont maintenues pour des durées de plus en plus longues sans déconnexion. Les tunnels administrés par les opérateurs de réseau et véhiculant ces sessions, sont mis en œuvre à l'initialisation de ces sessions et ne sont pas mis à jour en cours de session, y compris si les besoins applicatifs varient. Ainsi, si les caractéristiques des sessions applicatives requièrent une mise à jour des tunnels en termes de délai, de bande passante, de qualité de service, il n'est pas possible de modifier dynamiquement ces tunnels, s'il s'agit effectivement de tunnels, ou bien les routes si l'infrastructure de l'opérateur est basé sur des techniques de routage.

Contrairement à cette technique antérieure, l'invention permet d'apporter une solution à ce problème en permettant, via la mise en œuvre d'au moins un dispositif de gestion de tunnel ou de chemin pour être plus générique, de mettre à jour les tunnels supportant le transport des données de la session, en modifiant un tunnel existant, en créant un nouveau tunnel, ou en envoyant les données sur plusieurs tunnels sachant que les tunnels en question peuvent supporter simultanément plusieurs sessions. Cette invention peut également être mise en œuvre dans le cas où l'infrastructure n'est pas basée sur des tunnels mais sur des techniques de routage IP voire sur des liaisons de niveau 2 OSI comme des circuits virtuels, voire des liaisons louées dans un environnement ou les fonctions liées à la mise en place de ces chemins (tunnels, circuits virtuels, liaisons louées). De plus, le dispositif de gestion de chemin selon l'invention peut être instancié dans un équipement physique ou déployé sous la forme d'une fonction virtualisée.

## Revendications

1. Procédé de gestion d'au moins un chemin de communication pour l'acheminement des données d'une session établie entre un terminal (10) connecté à un premier routeur (30) et un équipement distant (70) connecté à un deuxième routeur (130), le procédé comprend les étapes suivantes mises en œuvre par un dispositif de gestion de chemin de communication, déployé entre le terminal et l'équipement distant:
• Une analyse d'au moins un paramètre de la session (40) établie pour déterminer si la dite session (40) est collaborative, c'est-à-dire qu'elle peut bénéficier de la gestion de l'au moins un chemin, et si c'est le cas :
• Un envoi de messages d'initialisation de session collaborative vers le terminal (10) et l'équipement distant (70) si la session est collaborative
• Une réception en provenance du terminal ou de l'équipement distant d'au moins un message de signalisation comprenant au moins une information relative à une caractéristique de ladite session (40),
• Une détermination de paramètres de connexion entre lesdits routeurs (30,130) en fonction de l'au moins une information obtenue,
• Une émission des paramètres de connexion à destination du premier ou du deuxième routeur pour la mise à jour de l'au moins un chemin de communication (80) entre lesdits routeurs (30,130), ledit chemin mis à jour étant utilisé pour la transmission des données de ladite session.

2. Procédé de gestion selon la revendication 1, où l'établissement de la session (40) comprend une étape d'analyse de la dite session pour la sélection dudit premier routeur (30) auquel le terminal (10) se connecte.

3. Procédé de gestion, selon l'une quelconque des revendications 1 à 2, comprenant une étape de sélection de l'au moins un chemin de communication (80), parmi des chemins préalablement établis, dont les caractéristiques correspondent aux paramètres de connexion, en fonction desdits paramètres de connexion.

4. Procédé de gestion, selon l'une quelconque des revendications 1 à 2, comprenant une étape d'établissement de l'au moins un chemin de communication (80) aux caractéristiques correspondant aux paramètres de connexion, dans le cas où aucun chemin préalablement établi ne correspond auxdits paramètres de connexion.

5. Procédé de gestion, selon la revendication 4, comprenant en outre une étape de multiplexage des données de la dite session (40) avec des données d'au moins une autre session dans l'au moins un chemin de communication (80).

6. Procédé de gestion selon l'une quelconque des revendications 3 à 5, comprenant en outre une étape de transmission des données de ladite session (40) sur au moins deux chemins de communication.

7. Dispositif de gestion de chemin de communication (20, 120), déployé entre le terminal (10) et le premier routeur d'extrémité (30) ou entre l'équipement distant (70) et le deuxième routeur d'extrémité (130), ledit dispositif comprenant
- un analyseur (204) d'au moins un paramètre de session (40) établie entre le terminal (10) et l'équipement distant (70) afin de déterminer si ladite session est collaborative, c'est-à-dire qu'elle peut bénéficier de la gestion de l'au moins un chemin,
- un générateur de messages d'initialisation de session collaborative (203) vers le terminal (10) et l'équipement distant (70) si ladite session (40) est collaborative
- un récepteur (201) en provenance du terminal ou de l'équipement distant d'au moins un message de signalisation comprenant au moins une information relative à une caractéristique de ladite session (40),
- un module de détermination (205) des paramètres de connexion entre lesdits routeurs en fonction d'au moins une information obtenue dans au moins un message de signalisation,
- un émetteur (202) des paramètres de connexion vers le routeur d'extrémité (30) pour la mise à jour de l'au moins un chemin de communication (80) entre lesdits routeurs (30,130), ledit chemin mis à jour étant utilisé pour la transmission des données de ladite session.

8. Dispositif de gestion (20,120), selon la revendication 7, **caractérisé en ce qu'**il est embarqué dans un routeur d'extrémité de chemin de communication (30,130)

9. Système de gestion de chemin de communication comprenant :
- au moins un dispositif de gestion (20,120) selon la revendication 7,
- au moins deux routeurs d'extrémité de chemin de communication (30,130) comprenant:
- une base de données décrivant les chemins de communication (80) établis avec d'autres routeurs d'extrémité (30) et des caractéristiques desdits chemins de communication,
- un récepteur des paramètres de connexion d'une session entre un terminal et un équipement distant émis par le dispositif de gestion de chemin de communication,
- un module de sélection du chemin de communication en fonction desdits paramètres de connexion.

10. Programme de gestion de chemin de communication, **caractérisé en ce qu'**il comprend des instructions pour la mise en œuvre des étapes du procédé de gestion selon la revendication 1, lorsque ledit programme est exécuté par un processeur.

11. Support d'enregistrement lisible par un dispositif de gestion (20) ou un routeur d'extrémité (30,130) sur lequel est enregistré le programme selon la revendication 10.

## Patentansprüche

1. Verfahren zur Verwaltung mindestens eines Kommunikationspfades zur Weiterleitung der Daten einer Sitzung, die zwischen einem Endgerät (10), das mit einem ersten Router (30) verbunden ist, und einer entfernten Einrichtung (70), die mit einem zweiten Router (130) verbunden ist, hergestellt ist, das Verfahren die folgenden Schritte beinhaltet, die durch eine Vorrichtung zur Verwaltung eines Kommunikationspfades, die zwischen dem Endgerät und der entfernten Einrichtung eingesetzt ist, umgesetzt werden:
• Analysieren mindestens eines Parameters der hergestellten Sitzung (40), um zu bestimmen, ob die Sitzung (40) kollaborativ ist, das heißt, ob sie von der Verwaltung des mindestens einen Pfades profitieren kann, und wenn ja:
• Senden von Nachrichten zur Initialisierung einer kollaborativen Sitzung an das Endgerät (10) und die entfernte Einrichtung (70), falls die Sitzung kollaborativ ist,
• Empfangen, von dem Endgerät oder der entfernten Einrichtung, mindestens einer Signalisierungsnachricht, die mindestens eine Information über eine Eigenschaft der Sitzung (40) beinhaltet,
• Bestimmen von Verbindungsparametern zwischen den Routern (30, 130) in Abhängigkeit von der mindestens einen erhaltenen Information,
• Ausgeben der Verbindungsparameter an den ersten oder den zweiten Router, um den mindestens einen Kommunikationspfad (80) zwischen den Routern (30, 130) zu aktualisieren, wobei der aktualisierte Pfad für die Übertragung der Daten der Sitzung verwendet wird.

2. Verwaltungsverfahren nach Anspruch 1, wobei die Herstellung der Sitzung (40) einen Schritt des Analysierens der Sitzung beinhaltet, um den ersten Router (30), mit dem sich das Endgerät (10) verbindet, auszuwählen.

3. Verwaltungsverfahren nach einem der Ansprüche 1 bis 2, das einen Schritt des Auswählens, aus zuvor hergestellten Pfaden, des mindestens einen Kommunikationspfades (80), dessen Eigenschaften den Verbindungsparametern entsprechen, in Abhängigkeit von den Verbindungsparametern beinhaltet.

4. Verwaltungsverfahren nach einem der Ansprüche 1 bis 2, das einen Schritt des Herstellens des mindestens einen Kommunikationspfades (80) mit den Eigenschaften, die den Verbindungsparametern entsprechen, beinhaltet, falls kein zuvor hergestellter Pfad den Verbindungsparametern entspricht.

5. Verwaltungsverfahren nach Anspruch 4, das ferner einen Schritt des Multiplexierens der Daten der Sitzung (40) mit Daten mindestens einer anderen Sitzung in dem mindestens einen Kommunikationspfad (80) beinhaltet.

6. Verwaltungsverfahren nach einem der Ansprüche 3 bis 5, das ferner einen Schritt des Übertragens der Daten der Sitzung (40) auf mindestens zwei Kommunikationspfaden beinhaltet.

7. Vorrichtung zur Verwaltung eines Kommunikationspfades (20, 120), die zwischen dem Endgerät (10) und dem ersten Endrouter (30) oder zwischen der entfernten Einrichtung (70) und dem zweiten Endrouter (130) eingesetzt ist, wobei die Vorrichtung Folgendes beinhaltet:
- eine Einheit zum Analysieren (204) mindestens eines Parameters einer zwischen dem Endgerät (10) und der entfernten Einrichtung (70) hergestellten Sitzung (40), um zu bestimmen, ob die Sitzung kollaborativ ist, das heißt, ob sie von der Verwaltung des mindestens einen Pfades profitieren kann,
- eine Einheit zum Generieren von Nachrichten zur Initialisierung einer kollaborativen Sitzung (203) an das Endgerät (10) und die entfernte Einrichtung (70), falls die Sitzung (40) kollaborativ ist,
- eine Einheit zum Empfangen (201), von dem Endgerät oder der entfernten Einrichtung, mindestens einer Signalisierungsnachricht, die mindestens eine Information über eine Eigenschaft der Sitzung (40) beinhaltet,
- ein Modul zum Bestimmen (205) der Verbindungsparameter zwischen den Routern in Abhängigkeit von mindestens einer Information, die in mindestens einer Signalisierungsnachricht erhalten wird,
- eine Einheit zum Ausgeben (202) der Verbindungsparameter an den Endrouter (30), um den mindestens einen Kommunikationspfad (80) zwischen den Routern (30, 130) zu aktualisieren, wobei der aktualisierte Pfad für die Übertragung der Daten der Sitzung verwendet wird.

8. Verwaltungsvorrichtung (20, 120) nach Anspruch 7, **dadurch gekennzeichnet, dass** sie in einem Endrouter eines Kommunikationspfades (30, 130) enthalten ist.

9. System zur Verwaltung eines Kommunikationspfades, das Folgendes beinhaltet:
- mindestens eine Verwaltungsvorrichtung (20, 120) nach Anspruch 7,
- mindestens zwei Endrouter eines Kommunikationspfades (30, 130), die Folgendes beinhalten:
- eine Datenbank, die die mit anderen Endroutern (30) hergestellten Kommunikationspfade (80) und Eigenschaften der Kommunikationspfade beschreibt,
- eine Einheit zum Empfangen der Verbindungsparameter einer Sitzung zwischen einem Endgerät und einer entfernten Einrichtung, die durch die Vorrichtung zur Verwaltung eines Kommunikationspfades ausgegeben werden,
- ein Modul zum Auswählen des Kommunikationspfades in Abhängigkeit von den Verbindungsparametern.

10. Programm zur Verwaltung eines Kommunikationspfades, **dadurch gekennzeichnet, dass** es Anweisungen für die Umsetzung der Schritte des Verwaltungsverfahrens nach Anspruch 1 beinhaltet, wenn das Programm durch einen Prozessor ausgeführt wird.

11. Durch eine Verwaltungsvorrichtung (20) oder einen Endrouter (30, 130) lesbares Aufzeichnungsmedium, auf dem das Programm nach Anspruch 10 aufgezeichnet ist.

## Claims

1. Method for managing at least one communication path for the routing of the data of a session established between a terminal (10) connected to a first router (30) and remote equipment (70) connected to a second router (130), the method comprises the following steps implemented by a communication path management device, deployed between the terminal and the remote equipment:
• an analysis of at least one parameter of the established session (40) to determine whether said session (40) is collaborative, that is to say that it can benefit from the management of the at least one path, and if such is the case:
• a sending of collaborative session initialization messages to the terminal (10) and the remote equipment (70) if the session is collaborative,
• a reception, from the terminal or from the remote equipment, of at least one signalling message comprising at least one item of information relating to a characteristic of said session (40),
• a determination of connection parameters between said routers (30, 130) based on the at least one item of information obtained,
• a transmission of the connection parameters to the first or the second router for the updating of the at least one communication path (80) between said routers (30, 130), said updated path being used for the transmission of the data of said session.

2. Management method according to Claim 1, in which the establishment of the session (40) comprises a step of analysis of said session for the selection of said first router (30) to which the terminal (10) connects.

3. Management method according to either one of Claims 1 and 2, comprising a step of selection of the at least one communication path (80) from among previously established paths, the characteristics of which correspond to the connection parameters, based on said connection parameters.

4. Management method according to either one of Claims 1 and 2, comprising a step of establishment of the at least one communication path (80) with the characteristics corresponding to the connection parameters, in the case where no previously established path corresponds to said connection parameters.

5. Management method according to Claim 4, further comprising a step of multiplexing of the data of said session (40) with data of at least one other session in the at least one communication path (80).

6. Management method according to any one of Claims 3 to 5, further comprising a step of transmission of the data of said session (40) over at least two communication paths.

7. Communication path management device (20, 120), deployed between the terminal (10) and the first end router (30) or between the remote equipment (70) and the second end router (13), said device comprising
- an analyser (204) of at least one parameter of a session (40) established between the terminal (10) and the remote equipment (70) in order to determine whether said session is collaborative, that is to say that it can benefit from the management of the at least one path,
- a generator of collaborative session initialization messages (203) to the terminal (10) and the remote equipment (70) if said session (40) is collaborative,
- a receiver (201), from the terminal or the remote equipment, of at least one signalling message comprising at least one item of information relating to a characteristic of said session (40),
- a module (205) for determining connection parameters between said routers based on at least one item of information obtained in at least one signalling message,
- a transmitter (202) of the connection parameters to the end router (30) for the updating of the at least one communication path (80) between said routers (30, 130), said updated path being used for the transmission of the data of said session.

8. Management device (20, 120) according to Claim 7, **characterized in that** it is embedded in a communication path end router (30, 130).

9. Communication path management system comprising:
- at least one management device (20, 120) according to Claim 7,
- at least two communication path end routers (30, 130) comprising:
- a database describing the communication paths (80) established with other end routers (30) and characteristics of said communication paths,
- a receiver of the connection parameters of a session between a terminal and remote equipment transmitted by the communication path management device,
- a module for selecting the communication path based on said connection parameters.

10. Communication path management program, **characterized in that** it comprises instructions for implementing the steps of the management method according to Claim 1, when said program is run by a processor.

11. Storage medium that can be read by a management device (20) or an end router (30, 130) on which is stored the program according to Claim 10.
